# EUROPEAN PATENT SPECIFICATION

(11) **EP 0 376 312 B1**
(45) Date of publication and mention of the grant of the patent: **03.04.1996**
(21) Application number: 89124080.6
(22) Date of filing: 28.12.1989
(51) Int. Cl.: H04N 1/387, H04N 1/203

(54) **Image information processing apparatus**
Bildinformationsverarbeitungsvorrichtung
Appareil de traitement d'information d'images

(30) Priority: 29.12.1988 JP 331183/88; 07.03.1989 JP 55701/89
(43) Date of publication of application: 04.07.1990
(73) Proprietor: CANON KABUSHIKI KAISHA, Tokyo (JP)
(72) Inventor: Masuda, Ryuichi, Funabashi-shi Chiba-ken (JP)
(74) Representative: Tiedtke, Harro, Dipl.-Ing.

(56) References cited:
- EP-A- 0 320 713
- PATENT ABSTRACTS OF JAPAN vol. 13, no. 450 (E-830)(3798)11 October 1989 & JP-A-1 173 962 & US-A-4 908 719

## Description

### BACKGROUND OF THE INVENTION

### Field of the Invention

The present invention relates to an image information processing apparatus such as an image information filing apparatus and facsimile apparatus, having a function to process the image information of a plurality of subjects.

### Related Background Art

After reading a subject having images on front (main) and back surfaces thereof with an image reader such as an image scanner, conventionally the images on the main and back surfaces have been maintained independently from each other.

If the image data on both surfaces are maintained independently, the image data of a subject whose correspondence between the both surface images has an important significance, such as the image data of a check with endorsement, cannot explicitly show such correspondence. The image data of one of both the surfaces may be lost accidentally. The maintenance of such image data becomes cumbersome. Further, in sequential retrieving of only the images on a main surface, it becomes necessary to retrieve the images every second page, resulting in a poor operability.

EP-A-0 320 713, published 21.06.89, discloses one type of document image processing system.

### SUMMARY OF THE INVENTION

It is an object of the present invention to provide an image information processing apparatus eliminating the above disadvantages.

It is another object of the present invention to provide an image information processing apparatus capable of maintaining the images of an original collectively for both main and back surfaces.

It is a further object of the present invention to provide an image information processing apparatus capable of retrieving the images on both main and back surfaces by using single retrieval information.

It is a still further object of the present invention to provide an image information processing apparatus capable of maintaining a plurality of images in the form of images each having both main and back surface images.

The other objects of the present invention will become apparent from the following detailed description and claims when read in connection with the accompanying drawings.

### BRIEF DESCRIPTION OF THE DRAWINGS

Fig. 1 is a schematic diagram showing the outline of the apparatus according to a first embodiment of this invention;
Fig. 2 illustrates how a key word is supplied;
Fig. 3 is a flow chart illustrating an image registration operation;
Fig. 4 is a detailed block diagram showing the reading operation control unit;
Figs. 5A to 5D illustrate synthesizing main and back surface images;
Fig. 6 illustrates how an image is registered;
Fig. 7 is a flow chart illustrating an image retrieval operation;
Fig. 8 illustrates how an image is retrieved;
Fig. 9 is a schematic diagram showing the outline of the apparatus according to a second embodiment of this invention;
Fig. 10 is a flow chart illustrating an image registration operation;
Fig. 11 is a detailed block diagram showing the reading control unit;
Fig. 12 illustrates synthesizing main and back surface images;
Fig. 13 is a flow chart illustrating an image retrieval operation;
Fig. 14 illustrates how an image is registered;
Fig. 15 is a flow chart illustrating an image retrieval operation;
Fig. 16 illustrates how an image is retrieved; and
Fig. 17 is a detailed block diagram of the reading control unit according to a third embodiment of this invention.

### DETAILED DESCRIPTION OF THE PREFERRED EMBODIMENTS

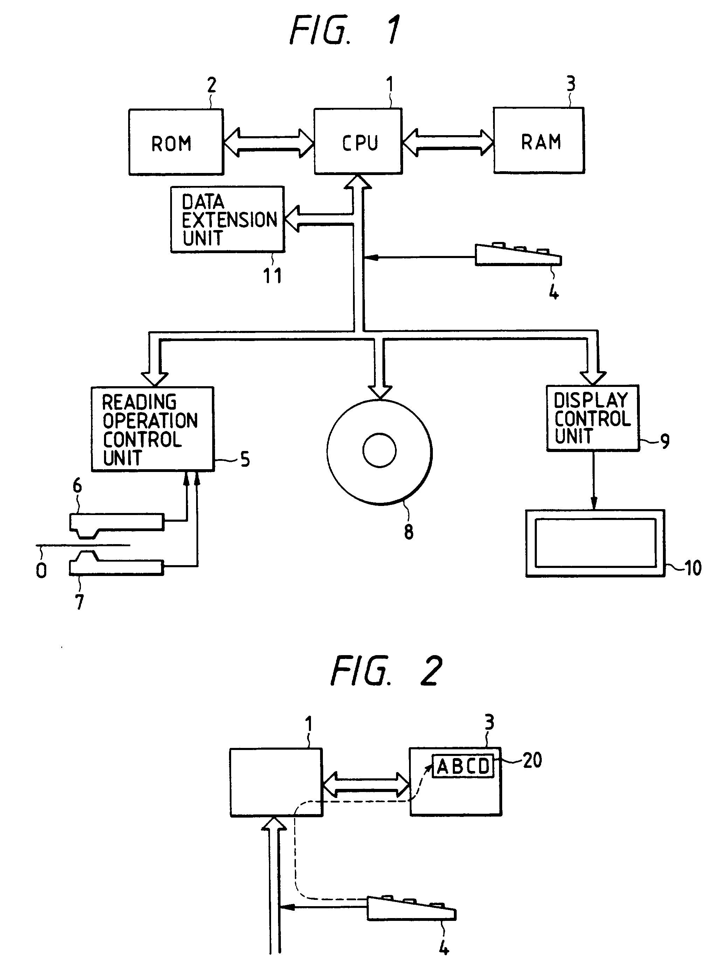

Fig. 1 is a schematic diagram showing the outline of the apparatus according to the first embodiment of this invention.

A CPU 1 controls the entirely of the apparatus. A ROM 2 stores control programs on which CPU 1 runs, and other data. A RAM 3 is used for configuring retrieval information. A keyboard 4 is used for inputting therefrom an image read instruction, a retrieval key word, and the like. An image reader is constructed of a main surface image reading unit 6 having a line image sensor made of a plurality of light receiving elements for reading an image of a subject on the main surface, a back surface image reading unit 7, and a reading operation control unit 5 for controlling the two image reading units 6 and 7. An optical disk 8 stores image data read with the image reader, retrieval data inputted from the keyboard, and other data. A display for displaying inputted keywords or retrieved image information is constructed of a liquid crystal display panel 10 and display control unit 9. The control unit 9 has a VRAM for the development of image data to be displayed. A data extension unit 11 extends compressed image data stored in the optical disk 8.

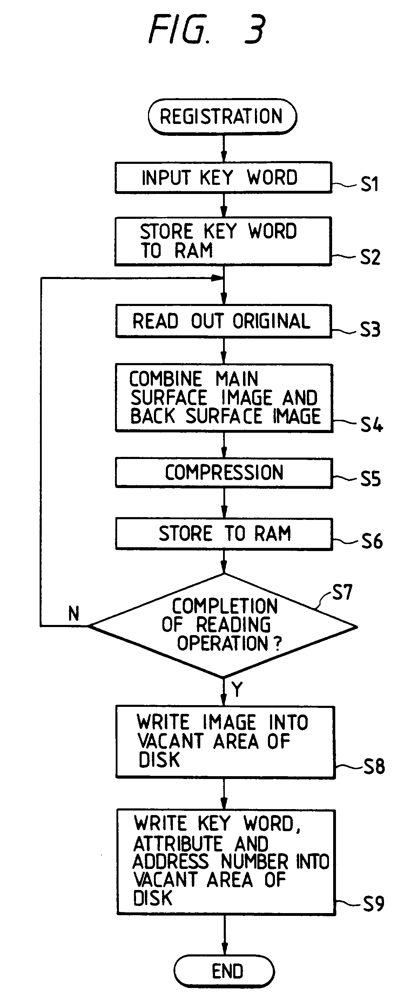

The operation of the apparatus shown in Fig. 1 will be described with reference to the flow chart shown in Fig. 3.

In reading an original with both surface images and storing the image data in the optical disk 8, a key word 20 for the original to be read and stored is first inputted from the keyboard 4 (S1). The inputted key word 20 is temporarily stored in RAM 3 (S2) (refer to Fig. 2). When an image reading operation starts upon input of a read instruction (S3), the image reading units 6 and 7 mounted on the front and back sides of an original transport path read the main and back surface images of the original O one line after another, and convert the image into analog electric signals which are outputted to the reading operation control unit 5 and display control unit 9. The reading operation control unit 5 synthesizes both surface image signals of one line into one set of signals (S4), compression-codes it (S5), and temporarily stores it in RAM 3 (S6). The display control unit 9 develops the read image data into VRAM for the display thereof on the display panel. Synthesizing both surface image signals is carried out in the following manner.

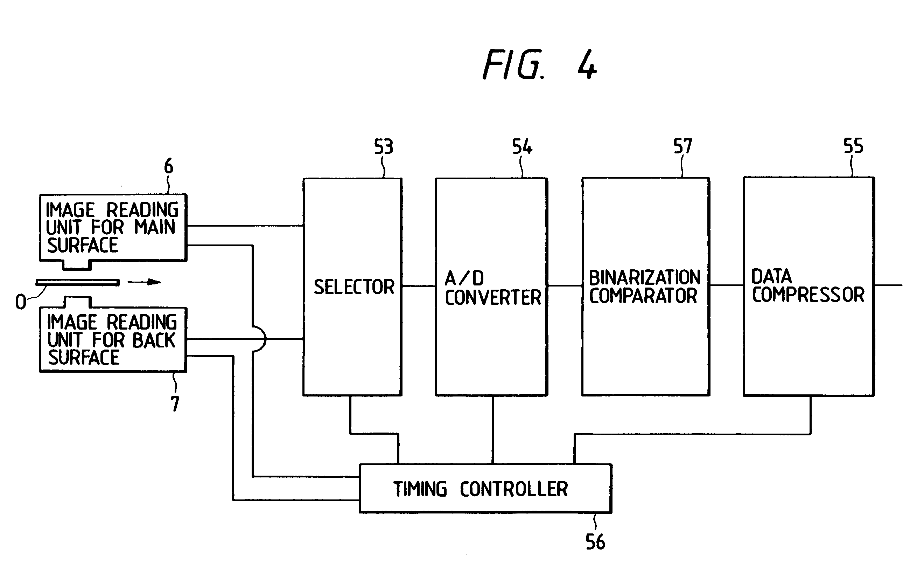

Fig. 4 is a detailed block diagram of the image reader shown in Fig. 1. A selector 53 selects on the line unit basis the image signals outputted from the image reading units 6 and 7 and outputs them to an A/D converter 54 which in turn converts the inputted analog image signals into a digital image signal having a predetermined number of bits per pixel. A binarization comparator 57 outputs "1" if the digital image signal from the A/D converter 54 is larger than a predetermined value, and "0" if smaller.

When an image reading operation starts, the image reading units 6 and 7 mounted on the front and back sides of the original transport path read the main and back surface images of the original O one line after another, and convert the image into analog electric signals which are outputted to the selector 53.

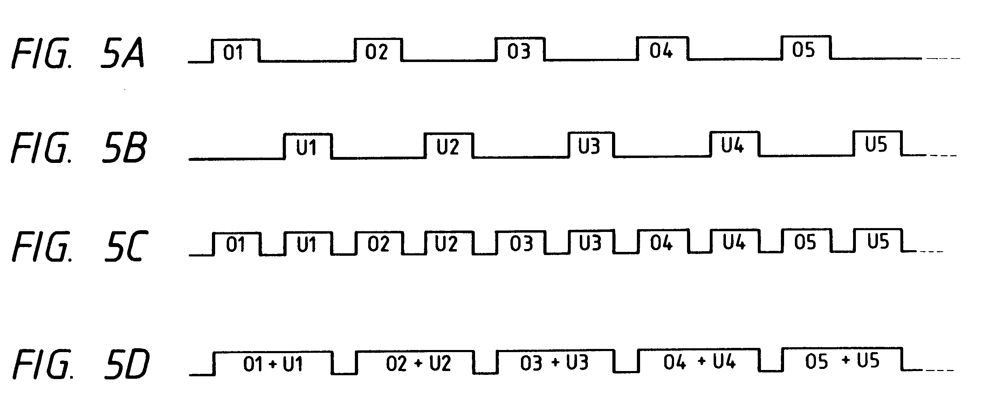

In synchro with a timing signal generated from a timing controller, the selector 53 selects alternately for each line the front and back surface image signals of the original O supplied from the image reading units 6 and 7, and outputs the image signals to the A/D converter 54. More in particular, main surface image signals O1, O2, ... as shown in Fig. 5A and back surface image signals U1, U2, ... as shown in Fig. 5B are synthesized together to obtain unitary sets of image signals as shown in Fig. 5C which are then outputted to the A/D converter 54.

The selector 53 has a buffer for temporarily storing analog signals so that main and back surface image signals can be synthesized synchronously.

At the A/D converter 54, the main and back surface image signals inputted from the selector 53 alternately for each line are converted into digital signals and outputted to the binarization comparator 57.

The binarization converter 57 compares the digital signal value from the A/D converter 54 with the predetermined value and outputs "1" or "0".

A data compressor 55 compresses binarized image signals. The data compressor 55 receives image read start timing and end timing signals from the timing controller 56. During the reading operation, the data compressor 55 compresses the data for each line, and outputs compressed data. This data compression process is carried out using a known MH (Modified Huffman) coding method or another method. The synthesized signal of main and back surface image signals is inputted to the data compressor 55 and compression-coded one line after another. The outputted compression data cannot be separated into main and back surface data easily, and the total data amount can be reduced.

It is also possible to control the timing controller 56 so as not to insert a line separation between a main surface one line signal and back surface one line signal, so that the main surface one line signal and back surface one line signal can be combined as a one line signal as shown in Fig. 5D. With this compression decoding, the number of line separation codes can be reduced. Further, it is also possible to use two-dimensional compression coding methods such as MR coding method, MMR coding method or the like each having a higher compression rate.

The compressed codes outputted from the data compressor 55 are stored in RAM 3.

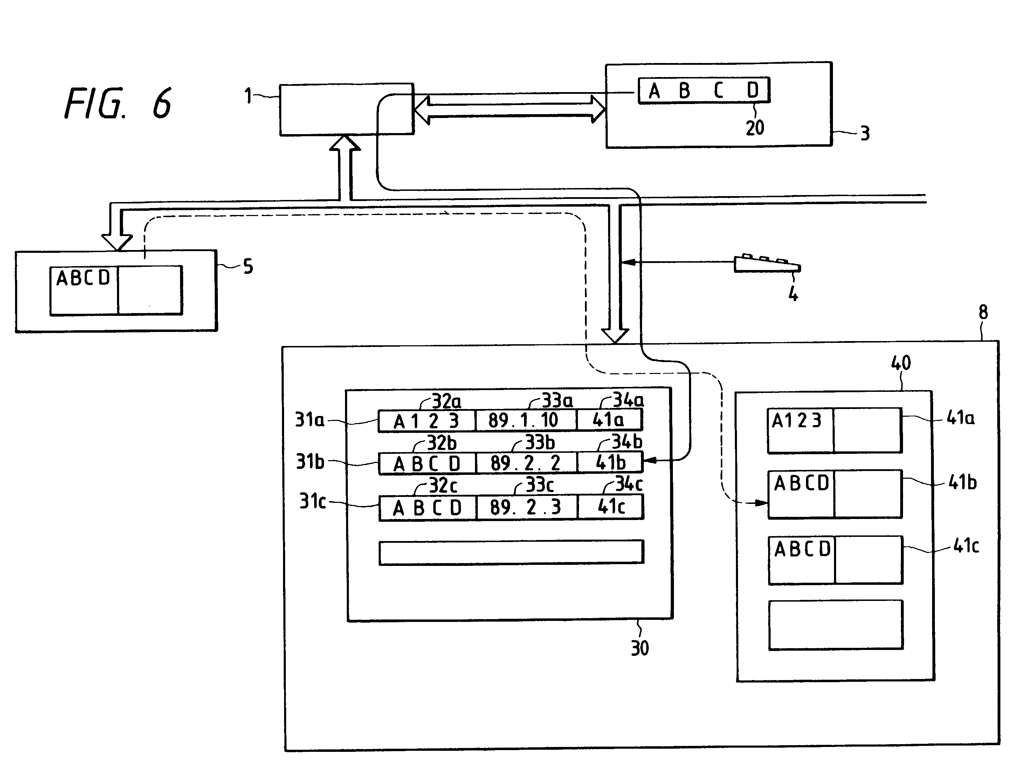

Upon completion of reading the original image (S7), as illustrated in Fig. 6, CPU 1 receives the compression-coded image information from the reading operation control unit 5, searches a vacant area (indicated at 41b) in an image information area 40 of the optical disk 8, and writes the image information obtained through synthesizing the main and back surface images into the optical disk 8 (S8). Also written in another vacant area (indicated at 31b) in a retrieval information area 30 of the optical disk, are the key word 32b stored in RAM 3, the attribute 33b (compression method, registration data and the like) of the image information, and the address 34b of the image information stored area (S9). If a new image is read by using the same key word previously used, the later read image is regarded as consecutive with the earlier read image. In this case, the retrieval information of the later read image such as indicated at 31c serves as a pointer to the later read image information with the same key word.

Inputting a key word may be carried out after the image information has been stored in the optical disk.

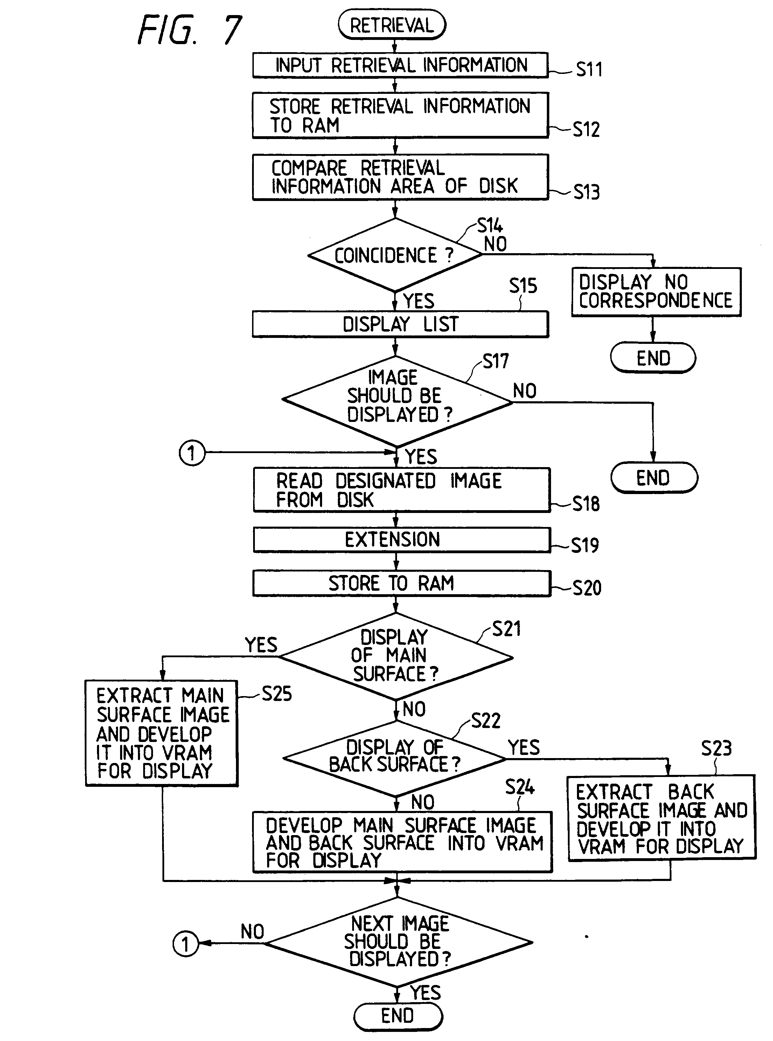

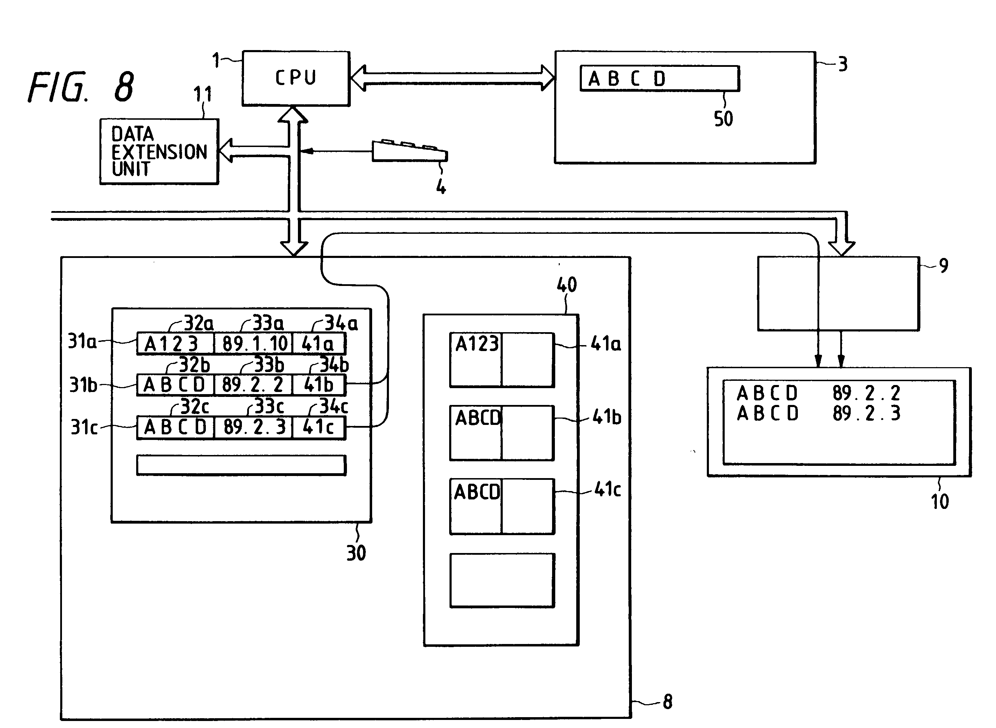

Next, retrieving necessary information from the optical disk 8 will be described with reference to the flow chart shown in Fig. 7. As illustrated in Fig. 8, the retrieval information regarding an image to be retrieved is first inputted from the keyboard 4 (S11). The inputted retrieval information is temporarily stored in RAM 3 (S12). By using the key word 50 stored in RAM 3, CPU 1 searches the key word, same as the key word 50 stored in RAM 3 (S13), from the retrieval information area 30 of the optical disk 8. If there is a coincident key word, (S14), the corresponding retrieval information is picked up and sent to the display control unit 9 which in turn sequentially displays the retrieval result information on the liquid cyrstal panel 10 (S15). In searching image information, not only a key word, but also another attribute such as date may be used.

If the retrieved image information is to be accessed (S17), the image information is read from the optical disk by using the address of the image information stored area indicated in the retrieval result information, and is extended and decoded at the data extension unit (S19). The extended image information is stored in RAM (S20), and sent to the display control unit 9 for the development of the image information data into VRAM to display the data on the liquid crystal panel 10. In this case, the read image information including the main and back surface images may be displayed at the same time, or one of the main and back surface images only may be displayed upon designation from the keyboard or automatically. Discriminating between the main and back surface images can be performed by extracting either the front or back half of the image information of each line. If other image information is to be retrieved, the key word coincident with that of the image information to be retrieved is searched from the retrieval information area, and thereafter the similar operations described above are performed to display the image information.

As described above, an original having both surface images can be retrieved by using single retrieval information, so that an operator is not required to count the page number as in the case where front and back surface images are separately maintained.

In the above embodiment, the retrieved image information is displayed on the panel of the apparatus. The retrieved image may be transmitted to a remote site via a communication line or may be printed out using a printer. Further, the retrieval information may be inputted not only from the keyboard but also from a remote site via a communication line, or may be read from an external storage unit such as a floppy disk connected to the apparatus.

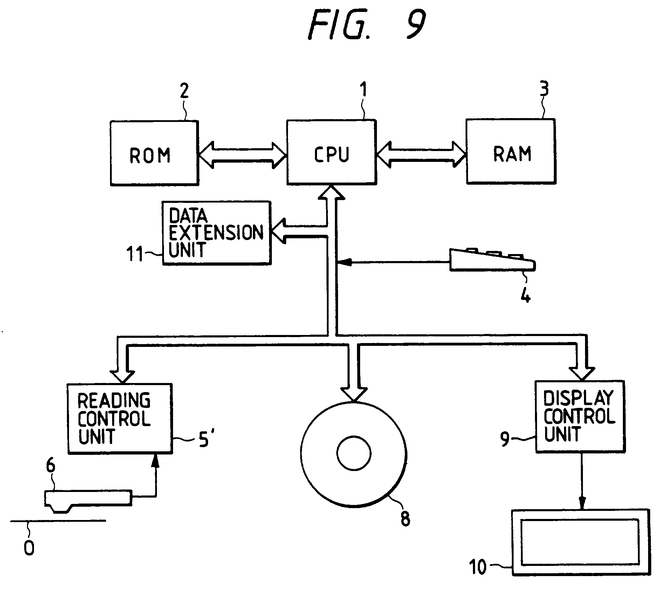

Fig. 9 is a schematic diagram showing the outline of the apparatus according to the second embodiment of this invention.

Reference numeral 5′ represents a reading control unit for an image reader which reads only one surface image of a subject, as different from the first embodiment. The other components are similar to those of the first embodiment, so that the description therefor is omitted.

The operation of the apparatus shown in Fig. 9 will be described below.

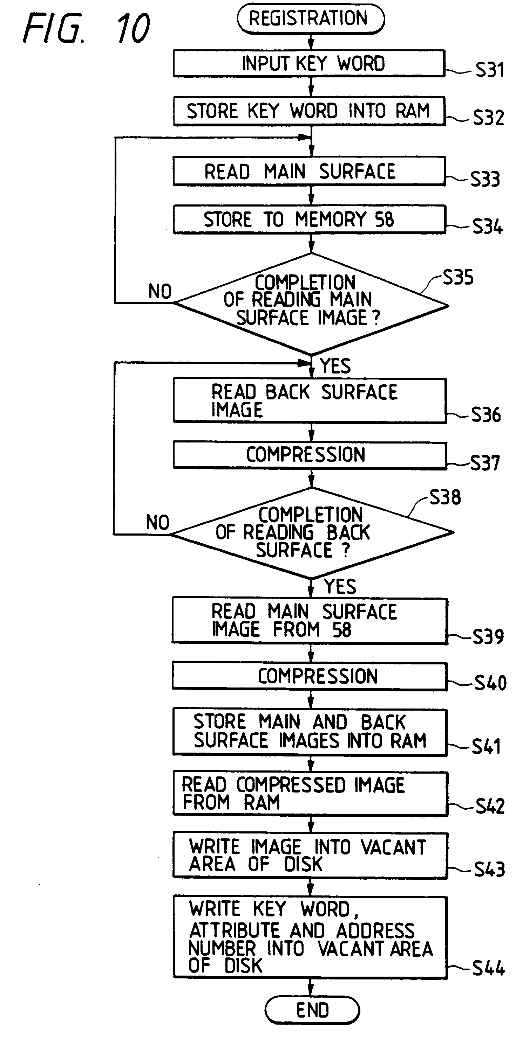

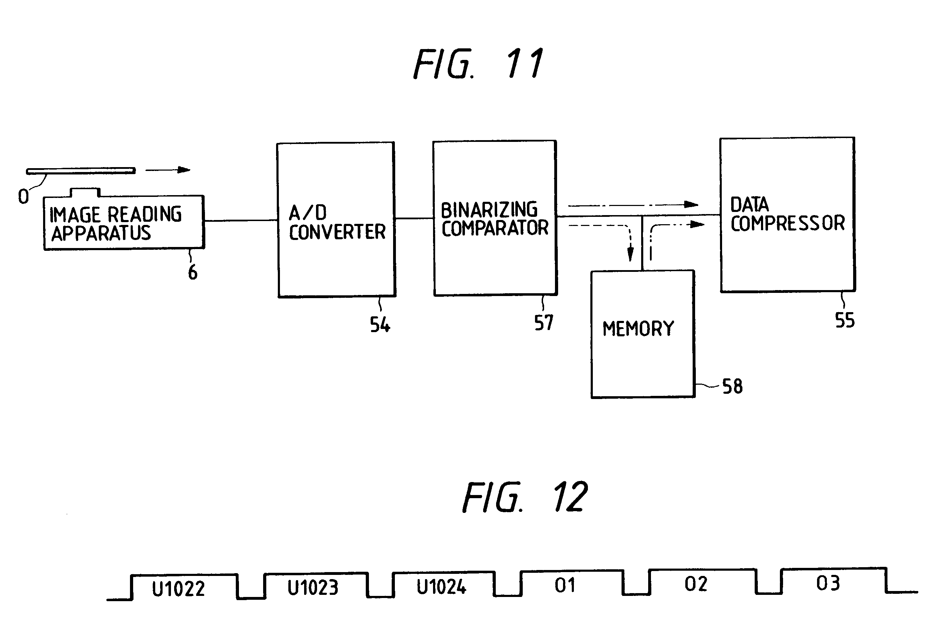

Reading an original with both surface images and storing the image data in the optical disk 8, will be described with reference to the flow chart shown in Fig. 10. A key word 20 for the original to be read and stored is first inputted from the keyboard 4 (S31). The inputted key word 20 is temporarily stored in RAM 3 (S32) (refer to Fig. 2). In the image reading operation, the original is set so as to allow the reading unit 6 to read the main surface image thereof. When an image reading operation starts upon input of a read instruction, the image is converted into an analog electric signal one line after another, and sent to the reading control unit 5′ which is constructed as shown in Fig. 11. An A/D converter 54 converts an analog image signal inputted from the image reading unit 6 into a digital image signal having a predetermined number of bits per pixel. A binarization comparator 57 outputs "1" if the digital image signal from the A/D converter 54 is larger than a predetermined value, and "0" if smaller. A memory 58 stores binarized image data. A data compressor 55 compresses image data.

First, an original O having both surface images is transported with the main surface image being set to be read one line after another (S33). The image signal read from the main surface is converted into a digital signal by the A/D converter 54, binarized by the binarization comparator 57, and temporarily stored in the memory 58 as indicated by a broken line (S34).

Upon completion of reading the main surface image (S35), the same original O is transported with the back surface image being set to be read one line after another (S36). The image signal read from the back surface is converted into a digital signal by the A/D converter 54, binarized by the binarization comparator 57, and directly inputted to the data compressor as indicated by a one-dot-dash arrow line shown in Fig. 11 (S37). After the image signal at the last line (1024-th line) of the back surface image has been inputted (S38), the image signals of the main surface are read from the memory 58 (S39) and inputted to the data compressor 55 as indicated at a two-dot-dash arrow line shown in Fig. 11 (S40). More particularly, as shown in Fig. 12, following the image signals of the back surface image U1022, U1023 and U1024, the image signals of the main surface image 01, 02, and 03 are inputted. Even if the original is read separately for both the surfaces, the image data for both the surfaces can be compressed as a unitary set. The compressed image is stored in RAM 3. All image data may be stored in the memory 58 sequentially in the order of reading operation, and after the reading operation, the image data may be inputted to the data compressor 55. In this case, the image data can be stored as much as the memory capacity permits. It is therefore possible to handle documents having a plurality of pages without paying attention to a missing page.

After completion of reading the main and back surface images of the original, CPU 1 picks up the compression-coded image information from RAM 3 (S42). In the similar manner described with Fig. 6, a vacant area (indicated at 41c) in the image information area 40 of the optical disk 8 is searched, and the image information is written in the vacant area (S43). Also written in another vacant area (indicated at 31c) in the retrieval information area 30 of the optical disk 8, are a key word 32c stored in RAM 3, the attribute (compression method, registration date and the like) of the image information, and the address 34c of the image information stored area (S44).

The operation of retrieving necessary information from the optical disk is the same as described with the first embodiment (Fig. 7), so the description therefor is omitted.

In displaying the stored image information, the main and back surface images can be discriminated on the basis of the count of the number of lines. In this embodiment, a separation between, the main and back surface images is decided when the count reaches 1024 lines.

In the second embodiment, the main and back surface images have been compressed while synthesizing both images. The main and back surface images may be compressed independently from each other. This processes will be described briefly in the following.

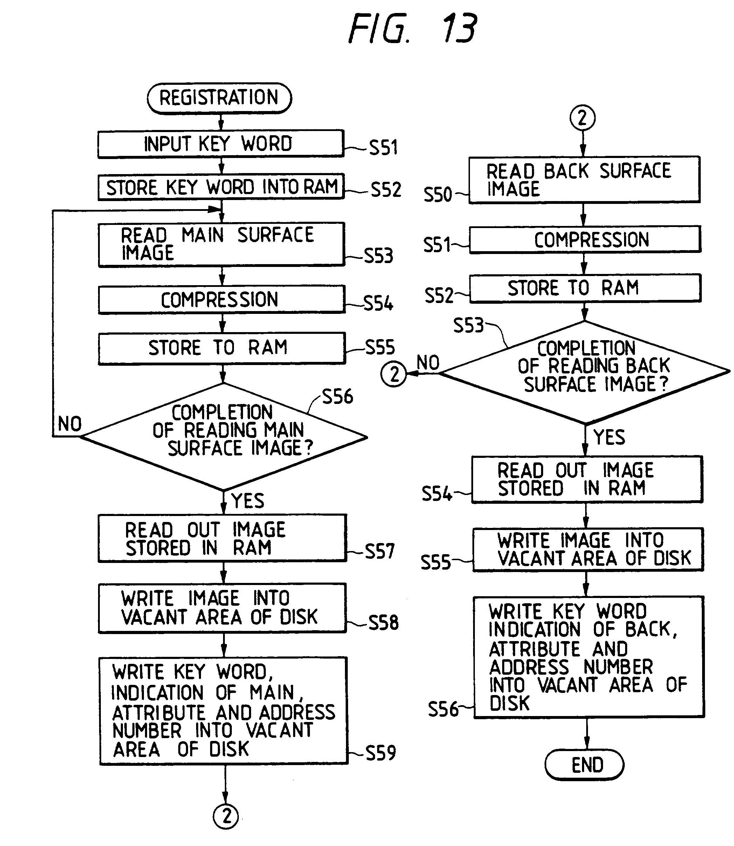

Reading an original with both surface images and storing the image information in the optical disk 8 will be described with reference to the flow chart shown in Fig. 13. A key word 20 for the original to be read and stored is first inputted from the keyboard 4 (S51). The inputted key word 20 is temporarily stored in RAM 3 (S52) (refer to Fig. 2). In the image reading operation, the original is transported with the main surface being set to be read one line after another. The main surface image is then converted into an analog electric signal and outputted to the reading control unit 5′. In the reading control unit 5′, the read main surface image signal is converted into a digital signal by the A/D converter 54, binarized by the binarization comparator 57, compression-coded by the data compressor 55 (S54), and stored in RAM 3 (S55). In this case, the memory 55 shown in Fig. 11 is not used.

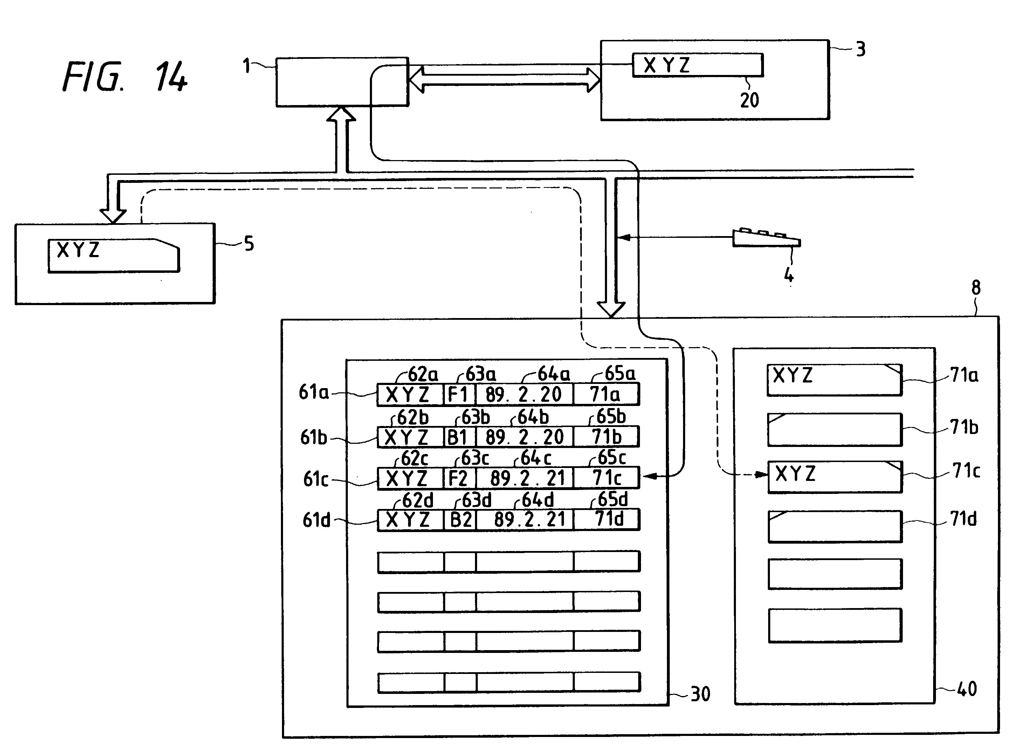

Upon completion of reading the main surface image of the original (S56), as illustrated in Fig. 14, CPU 1 receives the compression-coded image information from RAM 3 (S57), searches a vacant area (indicated at 71c) in an image information area 40 of the optical disk 8, and writes the image information into the optical disk 8 (S58). Also written in another vacant area (indicated at 61c) in a retrieval information area 30 of the optical disk, are the key word 62c stored in RAM 3, the information 63c (F2 indicates the second page main surface image) representative of a particular page of the main or back surface image for the key word, the attribute 64c (compression method, registration data and the like) of the image information, and the address 71c of the image information stored area (S59). Next, the original is turned upside down to read the back surface image. In the similar manner to the operation for reading the main surface image, the back surface image is stored in the optical disk 8. The image information is stored in an area 71d, whereas the retrieval information is stored in an area 61d (S60 to S66). Specifically, the consecutively read main and back surface images are affixed with the same retrieval information and with main/back surface discrimination information. For the third surface image, a new retrieval information may be inputted.

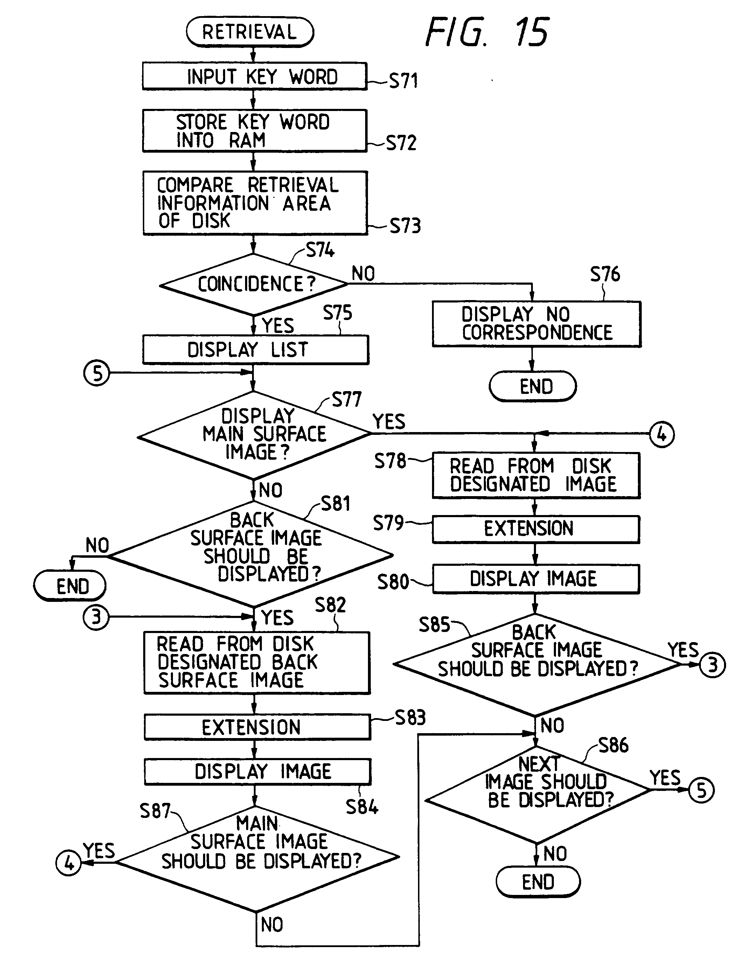

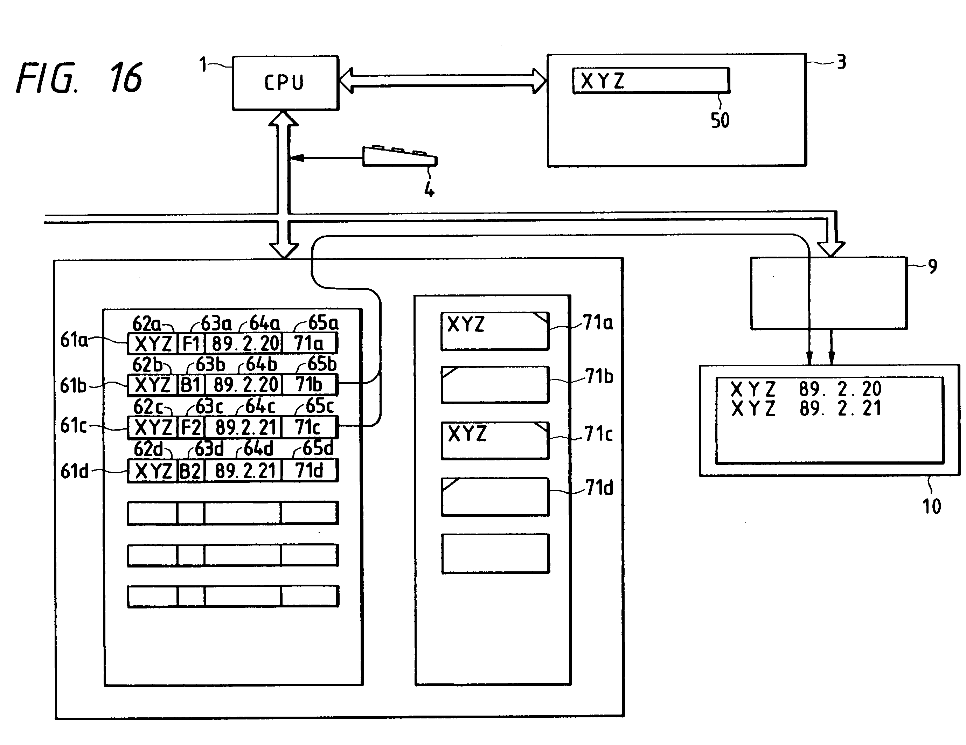

Next, retrieving necessary information from the optical disk 8 will be described with reference to the flow chart shown in Fig. 15. As illustrated in Fig. 16, the retrieval information regarding an image to be retrieved is first inputted from the keyboard 4 (S71). The inputted retrieval information is temporarily stored in RAM 3 (S72). By using the key word 50 stored in RAM 3, CPU 1 searches the retrieval information, same as that having the key word 50 stored in RAM 3 and having the main surface discrimination information, from the retrieval information area 30 of the optical disk 8 (S74). If there is a coincident retrieval information, it is sent to the display control unit 9 which in turn sequentially displays the retrieval result information on the liquid crystal panel 10 (S75). In searching image information, not only a key word, but also another attribute such as date may be used.

If the retrieved image information is to be accessed (S77), the image information is read from the optical disk by using the address of the image information stored area indicated in the retrieval result information (S78), and is extended and decoded at the data extension unit 11 (S79). The extended image information is sent to the display control unit 9 for the development of the image information data into VRAM to display the data on the liquid crystal panel 10 (S80). In this case, which image among the main and back surface images is to be displayed may be previously determined or may be determined upon a designation instruction from the keyboard. If the opposite surface image to the image now being displayed is to be displayed, a main/back surface reverse instruction is inputted from the keyboard (S81, S85). A retrieval information having the same page number and opposite surface is searched while referring to the fields 63 storing page numbers and main/back surfaces, and in accordance with the searched retrieval information, the corresponding image information is read (S82), extension-decoded (S83) and displayed (S84). If other image information is to be retrieved (S86), a retrieval information having the same key word and main/back discrimination information is searched from the retrieval information area, and thereafter the similar operations described above are performed to display the image information. In this embodiment, retrieval information is provided for each of the main and back surface images so that the image information for both the main and back surfaces can be handled collectively in the similar manner as previously described with the retrieval information management method.

There may be mounted on the image reading unit an apparatus such as a document feeder which can turn upside down an original after reading one surface images of the original. In this case, after transporting an original to read main surface images and store them in the optical disk 8, the following operations can be automatically carried out, the operations including outputting from CPU 1 to the document feeder an original reverse instruction, reading the back surface images, and storing the image information in the optical disk 8. It is therefore not necessary for an operator to pay attention to whether the original is now set facing upward or downward, thereby avoiding an erroneous operation and allowing easier handling.

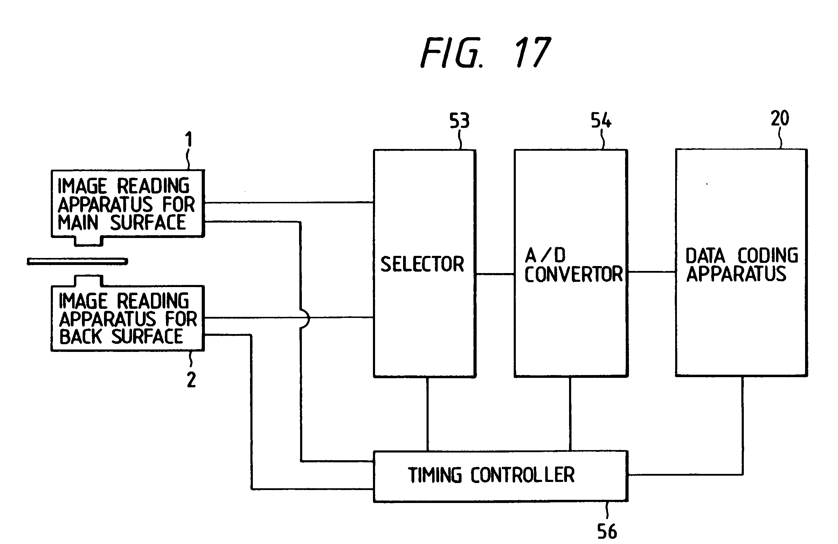

Fig. 17 is a block diagram showing the structure of the image reading control unit according to the third embodiment of this invention. Elements 1, 2, 53, 54 and 56 have the same structure as the first embodiment, so the description therefor is omitted.

Reference numeral 20 represents a data coding apparatus for coding a digital signal outputted from an A/D converter 54 in accordance with a predetermined coding method.

In this embodiment, a plurality of image data are collectively coded so that the image data cannot be decoded it an operator does not know the decoding method, thereby avoiding fraudulent use of data. In addition, it becomes difficult to separate the image data into main and back surface image data. For example, if only one of the main and back surface image data are coded, the image data of the other surface image can be replaced with other data. However, if the image data of both the surfaces are coded, it is not possible to replace one of the main and back surface image data with other data, thereby making it difficult to alter the data.

In the first and third embodiments, after synthesizing analog image signals, they are converted into digital signals. Alternatively, analog signals from the image reading unit may be converted first into digital signals, and then they are synthesized, while retaining the same advantageous effects.

An image information processing apparatus having an input unit for inputting image information, a synthesizing unit for synthesizing the image information for a plurality of frames inputted from the input unit, and a coding unit for coding the image information synthesized by the synthesizing unit.

## Claims

1. An image information processing apparatus comprising:
inputting means (5; S3) for inputting image information relating to front and back surface images of an original (0), line by line;
synthesizing means (5; S4) for synthesizing one line of the front surface image information of said original (0) and one line of the back surface image information of said original (0) to form unitary sets of image signals (Fig. 5C) or one line of combined image information (Fig. 5D);
encoding means (55; S5) for encoding said unitary sets or combined image information from said synthesizing means (5; S4);
storing means (1; S6-S8) for storing in a storage medium (8) the image information encoded by said encoding means (55;S5);
retrieving means (1; S11-S18) for retrieving the image information stored in said storage medium (8);
decoding means (11; S19) for decoding the image information retrieved by said retrieving means (1; S11-S18); and
separating means (1; S21-S22) for separating the image information decoded by said decoding means (11; S19), into an image of the front surface and an image of the back surface of said original (0).

2. An image information processing apparatus according to claim 1, further comprising original reading means (6, 7), for reading said front and back surface image information and providing that information to said inputting means (5; S3).

3. An image information processing apparatus according to claim 1, further comprising retrieval information generating means (1; S9) for generating retrieval information (32, 33, 34) for the image information input by said inputting means (5; S3), wherein said retrieval means retrieves the front surface image information and the back surface image information with one retrieval.

4. An image information processing apparatus according to claim 2, wherein said original reading means comprises:
a first reading unit (6) for reading a front surface image of said original (0); and
a second reading unit (7) for reading a back surface image of said original (0).

5. An image information processing apparatus according to claim 4, further comprising;
switching means (53) for alternately switching the front surface image read by said first reading unit (6) and the back surface image read by said second reading unit (7) and for outputting a switched image; wherein said synthesizing means (5; S4) serially arranges or combines the front surface image and the back surface image alternately output by said switching means (53).

6. An image information processing apparatus according to claim 1, further comprising outputting means (9, 10; S23-S25) for selectively outputting the image of front surface and the image of back surface separated by said separating means (1; S21, S22) and to selectively display the front surface image information and the back surface image information.

## Patentansprüche

1. Bildinformationsverarbeitungsvorrichtung mit:
Eingabemitteln (5; S3) zur zeilenweisen Eingabe von Bildinformationen, die sich auf das Vorder- und Rückseitenbild eines Originals (O) beziehen;
Zusammensetzmitteln (5; S4) zur Zusammensetzung einer Zeile der Vorderseiten- Bildinformation des Originals (O) auf einer Zeile der Rückseiten- Bildinformation des Originals (O) zur Bildung einheitlicher Sätze von Bildsignalen (Fig. 5C) oder einer Zeile zusammengesetzter Bildinformationen (Fig. 5D);
Codiermitteln (55; S5) zur Codierung der einheitlichen Sätze oder der zusammengestzten Bildinformationen aus den Zusammensetzmitteln (5; S4);
Speichermitteln (1; S6 bis S8) zur Speicherung der von den Codiermitteln (55; S5) codierten Bildinformation auf ein Speichermedium (8);
Auffindmitteln (1; S11 bis S18) zum Auffinden der in dem Speichermedium (8) gespeicherten Bildinformation;
Decodiermitteln (11; S19) zur Decodierung der von den Auffindmitteln (1; S11 bis S18) aufgefunden Bildinformation; und mit
Separiermitteln (1; S21 bis S22) zur Trennung der von den Decodiermitteln (11; S19) decodierten Bildinformation in ein Vorderseiten- und in ein Rückseitenbild des Originals (O).

2. Bildinformationsverarbeitungsvorrichtung nach Anspruch 1, die des weiteren mit Originallesemitteln (6, 7) ausgestattet ist, die die Vorderseiten- und Rückseiten- Bildinformation lesen, und diese Information für die Eingabemittel (5; S3) bereitstellen.

3. Bildinformationsverarbeitungsvorrichtung nach Anspruch 1, die des weiteren ausgestattet ist mit Auffindinformation-Erzeugungsmitteln (1; S9) zur Erzeugung der Auffindinformation (32, 33, 34) für die von den Eingabemitteln (5; S3) eingegebene Bildinformation, wobei das Auffindmittel die vorderseitige Bildinformation und die rückseitige Bildinformationen mit einem Auffindvorgang auffindet.

4. Bildinformationsverarbeitungsvorrichtung nach Anspruch 2, dessen Originallesemittel ausgestattet sind mit:
einer ersten Leseeinheit (6), die ein Vorderseitenbild des Originals (O) liest; und mit
einer zweiten Leseeinheit (7), die ein Rückseitenbild des Originals (O) liest.

5. Bildinformationsverarbeitungsvorrichtung nach Anspruch 4, die des weiteren ausgestattet ist mit:
Schaltmitteln (53) zur wechselweisen Umschaltung des von der ersten Leseeinheit (6) gelesenen Vorderseitenbildes und des von der zweiten Leseeinheit (7) gelesenen Rückseitenbildes und zur Ausgabe eines umgeschalteten Bildes; wobei das Zusammensetzmittel (5; S4) das von dem Umschaltmittel (53) wechselweise ausggegebene Vorderseitenbild und das Rückseitenbild seriell anordnet oder zusammensetzt.

6. Bildinformationsverarbeitungsvorrichtung nach Anspruch 1, die des weiteren mit Ausgabemitteln (9, 10; S23 bis S25) zur selektiven Ausgabe des von den Separiermitteln (1; S21, S22) getrennten Vorderseitenbildes und des Rückseitenbildes und zur selektiven Anzeige der Vorderseiten- Bildinformation und der Rückseiten- Bildinformation ausgestattet ist.

## Revendications

1. Appareil de traitement d'information d'image comprenant:
un moyen d'introduction (5; S3) pour introduire une information d'image relative à des images de surface recto et verso d'un original (O), ligne par ligne;
un moyen de synthèse (5; S4) pour synthétiser une ligne de l'information d'image de surface recto dudit original (O) et une ligne de l'information d'image de surface verso dudit original (O) pour former des séries unitaires de signaux d'image (figure 5C) ou une ligne d'information d'image combinée (figure 5D);
un moyen de codage (55; S5) pour coder lesdites séries unitaires ou l'information d'image combinée à partir dudit moyen de synthèse (5; S4);
un moyen de stockage (1; S6-S8) pour stocker dans un support de stockage (8) l'information d'image codée par ledit moyen de codage (55; S5);
un moyen de recherche (1; S11-S18) pour rechercher l'information d'image stockée dans ledit support de stockage (8);
un moyen de décodage (11; S19) pour décoder l'information d'image recherchée par ledit moyen de recherche (1; S11-S18); et
un moyen de séparation (1; S21-S22) pour séparer l'information d'image décodée par ledit moyen de décodage (11; S19), en une image de surface recto et une image de surface verso dudit original (O).

2. Appareil de traitement d'information d'image selon la revendication 1, comprenant en outre un moyen (6, 7) de lecture d'original, pour lire ladite information d'image des surfaces recto et verso et pour fournir cette information audit moyen d'introduction (5; S3).

3. Appareil de traitement d'information d'image selon la revendication 1, comprenant en outre un moyen (1; S9) de génération d'information de recherche pour générer une information de recherche (32, 33, 34) pour l'information d'image introduite par ledit moyen d'introduction (5; S3), ledit moyen de recherche recherchant l'information d'image de surface recto et l'information d'image de surface verso avec une recherche.

4. Appareil de traitement d'information d'image selon la revendication 2, dans lequel ledit moyen de lecture d'original comprend:
une première unité de lecture (6) pour lire une image de surface recto dudit original (O); et
une seconde unité de lecture (7) pour lire une image de surface verso dudit original (O).

5. Appareil de traitement d'information d'image selon la revendication 4, comprenant en outre:
un moyen de commutation (53) pour commuter alternativement l'image de surface recto lue par ladite première unité de lecture (6) et l'image de surface verso lue par ladite seconde unité de lecture (7) et pour délivrer une image commutée; dans lequel ledit moyen de synthèse (5; S4) dispose ou combine en série l'image de surface recto et l'image de surface verso alternativement délivrées par ledit moyen de commutation (53).

6. Appareil de traitement d'information d'image selon la revendication 1, comprenant en outre un moyen de sortie (9, 10; S23-S25) pour délivrer sélectivement l'image de la surface recto et l'image de la surface verso séparées par ledit moyen de séparation (1; S21, S22) et pour afficher sélectivement l'information d'image de surface recto et l'information d'image de surface verso.
